# FASCICULE DE BREVET EUROPEEN

(11) **EP 3 244 515 B1**
(45) Date de publication et mention de la délivrance du brevet: **06.07.2022**
(21) Numéro de dépôt: 17169329.4
(22) Date de dépôt: 03.05.2017
(51) Int. Cl.: H02K 9/18, H02K 1/20, H02K 1/32, H02K 5/20, H02K 9/06

(54) **MOTEUR ÉLECTRIQUE COMPRENANT UN DISPOSITIF DE REFROIDISSEMENT EXTÉRIEUR ET UNE PLURALITÉ DE CIRCUITS DE REFROIDISSEMENT**
ELEKTROMOTOR, DER EINE AUSSENKÜHLVORRICHTUNG UND EINE VIELZAHL VON KÜHLKREISLÄUFEN UMFASST
ELECTRIC MOTOR COMPRISING AN OUTER RADIATOR AND A PLURALITY OF COOLING CIRCUITS

(30) Priorité: 03.05.2016 FR 1653991
(43) Date de publication de la demande: 15.11.2017
(73) Titulaire: ALSTOM Transport Technologies, 93400 Saint-Ouen (FR)
(72) Inventeur: BOUALEM, Benali, 25660 SAONE (FR)
(74) Mandataire: Lavoix

(56) Documents cités:
- GB-A- 110 269
- US-A1- 2004 150 270

## Description

La présente invention concerne un moteur électrique comprenant un circuit primaire de refroidissement pour le refroidissement du stator du moteur et un circuit secondaire de refroidissement pour le refroidissement du rotor du moteur.

GB 110,269 divulgue:
Moteur électrique comprenant:
- un bâti définissant un volume intérieur;
- un rotor et un stator, le rotor et le stator étant logés dans le volume intérieur;
- au moins un circuit primaire de refroidissement traversant le stator, le circuit primaire comprenant une entrée primaire et une sortie primaire, chacune en communication fluidique avec l'extérieur du moteur, l'entrée primaire étant adaptée pour recevoir un fluide externe provenant de l'extérieur, le fluide externe étant destiné à circuler dans le circuit primaire et à sortir par la sortie primaire;
- au moins un dispositif de refroidissement, le dispositif de refroidissement comprenant une entrée secondaire, une sortie secondaire et au moins une conduite secondaire, l'entrée secondaire et la sortie secondaire étant en communication fluidique avec le volume intérieur, la conduite secondaire étant adaptée pour relier l'entrée secondaire et la sortie secondaire, et
- au moins un circuit secondaire de refroidissement séparé du circuit primaire, le circuit secondaire traversant le rotor et étant en communication fluidique avec l'entrée secondaire et la sortie secondaire du dispositif de refroidissement, un fluide interne étant destiné à circuler dans le circuit secondaire et dans le dispositif de refroidissement, et en plus, le moteur comprend, en outre, un canal délimitant un espace interne, le circuit primaire comprenant une déviation, reliée à l'entrée primaire, de sorte à alimenter le canal à partir d'une fraction du fluide externe reçu par l'entrée primaire.

Généralement, le circuit primaire est en communication fluidique avec l'extérieur du bâti du moteur de sorte à permettre un refroidissement du stator en faisant circuler un fluide externe, par exemple de l'air extérieur, dans le circuit primaire qui traverse et/ou entoure le stator. En revanche, le circuit secondaire n'est pas en communication fluidique avec l'extérieur du bâti afin d'éviter que des poussières, par exemple, ne viennent enrayer ou encrasser des éléments mobiles du moteur, en particulier le rotor.

Le circuit secondaire est alors relié à un dispositif de refroidissement qui assure un échange thermique entre un fluide interne circulant en circuit fermé dans le circuit secondaire et l'air extérieur.

Afin d'assurer un bon refroidissement du fluide interne, les dispositifs de refroidissement connus de l'état de la technique comprennent des ailettes fixées sur des parois externes et augmentent la surface d'échange thermique, un système de ventilation extérieur générant alors un courant d'air extérieur en direction de ces ailettes. A titre d'illustration, un tel système de ventilation est réalisé à partir de la circulation d'air engendrée par le mouvement du véhicule de transport dans lequel est monté le moteur, par exemple un véhicule ferroviaire.

Toutefois, ces dispositifs de refroidissement ne donnent pas entière satisfaction quant au refroidissement du fluide interne circulant dans le circuit secondaire.

En outre, lorsqu'un tel dispositif de refroidissement est couplé avec un système de ventilation, augmenter l'efficacité du dispositif de refroidissement nécessite d'augmenter la vitesse de la circulation d'air, ce qui induit des coûts et des dimensionnements élevés.

L'un des buts de l'invention est de proposer un moteur électrique comprenant un dispositif de refroidissement présentant une efficacité plus grande que dans l'état de la technique, sans nécessiter de modification des systèmes de ventilation existants.

A cet effet, l'invention a pour objet un moteur électrique comprenant :
- un bâti définissant un volume intérieur ;
- un rotor et un stator, le rotor et le stator étant logés dans le volume intérieur ;
- au moins un circuit primaire de refroidissement traversant le stator, le circuit primaire comprenant une entrée primaire et une sortie primaire, chacune en communication fluidique avec l'extérieur du moteur, l'entrée primaire étant adaptée pour recevoir un fluide externe provenant de l'extérieur, le fluide externe étant destiné à circuler dans le circuit primaire et à sortir par la sortie primaire ;
- au moins un dispositif de refroidissement extérieur au bâti, le dispositif de refroidissement comprenant une entrée secondaire, une sortie secondaire et au moins une conduite secondaire, l'entrée secondaire et la sortie secondaire étant en communication fluidique avec le volume intérieur, la conduite secondaire étant adaptée pour relier l'entrée secondaire et la sortie secondaire et s'étendant au moins en partie à l'extérieur du bâti, et
- au moins un circuit secondaire de refroidissement séparé du circuit primaire, le circuit secondaire traversant le rotor et étant en communication fluidique avec l'entrée secondaire et la sortie secondaire du dispositif de refroidissement, un fluide interne étant destiné à circuler dans le circuit secondaire et dans le dispositif de refroidissement,
le moteur est tel qu'il comprend, en outre, un canal délimitant un espace interne, le canal s'étendant entre une paroi interne du dispositif de refroidissement et une paroi externe du stator, le circuit primaire comprenant une déviation, reliée à l'entrée primaire, de sorte à alimenter le canal à partir d'une fraction du fluide externe reçu par l'entrée primaire.

Un tel moteur électrique présente notamment comme avantage d'accroître l'efficacité du refroidissement, par le dispositif de refroidissement, du fluide interne circulant dans le circuit secondaire, sans avoir à modifier substantiellement les structures existantes. En outre, la solution est simple et peu coûteuse à mettre en oeuvre, puisque qu'elle consiste à utiliser une partie du fluide externe circulant dans le circuit primaire sans pour autant modifier substantiellement les circuits primaire et secondaire ni créer de communication entre ces circuits.

Le moteur électrique selon l'invention peut en outre comprendre l'une ou plusieurs des caractéristiques suivantes, prises seules ou selon toutes combinaisons techniquement envisageables :
- la fraction du fluide externe circule dans le canal dans un sens sensiblement parallèle à la conduite secondaire du dispositif de refroidissement ;
- le dispositif de refroidissement comprend des ailettes internes de refroidissement situées dans l'espace interne, les ailettes internes étant fixées sur la paroi interne du dispositif de refroidissement et s'étendant le long d'une première direction, la première direction s'étendant sensiblement selon la direction de circulation du fluide externe circulant dans le canal ;

- le stator comprend des deuxièmes ailettes internes logées dans l'espace interne, les deuxièmes ailettes internes étant fixées sur la paroi externe du stator et s'étendant le long d'une première direction, la première direction s'étendant sensiblement selon la direction de circulation du fluide externe circulant dans le canal ;
- la vitesse du fluide externe circulant dans l'espace interne du canal est comprise entre 10 mètres/seconde et 80 mètres/seconde ;
- la fraction du fluide externe circule sur toute la longueur du canal, la longueur du canal étant au moins égale à 80% de la longueur de la conduite secondaire du dispositif de refroidissement ;
- la déviation est située en amont de la conduite secondaire du dispositif de refroidissement ;
- la fraction du fluide externe alimentant le canal est comprise entre 5% et 15% du fluide externe reçu par l'entrée primaire ;
- le dispositif de refroidissement définit un chemin de circulation fluidique s'étendant entre l'entrée secondaire et la sortie secondaire, la conduite secondaire du dispositif de refroidissement comprenant une pluralité de parois de séparation s'étendant dans des plans sensiblement perpendiculaires à la paroi interne du dispositif de refroidissement, les parois de séparation étant disposées de sorte à ce qu'un fluide circule selon le chemin de circulation fluidique dans au moins deux sens sensiblement opposés, et
- le canal présente des sections transversales de forme sensiblement rectangulaires dont la largeur est comprise entre 50 millimètres et 100 millimètres et dont la hauteur est comprise entre 20 millimètres et 40 millimètres.

L'invention sera mieux comprise à la lecture de la description qui va suivre, donnée uniquement à titre d'exemple et faite en se référant aux dessins annexés sur lesquels :
- la figure 1 est une section selon un premier plan I d'une partie d'un moteur électrique selon l'invention, le premier plan I étant défini par une première direction X-X' correspondant à l'axe de rotation du rotor du moteur et par une deuxième direction Y-Y' perpendiculaire à la première direction X-X' ;
- la figure 2 est une section selon un deuxième plan II du rotor du moteur de la figure 1, le deuxième plan II étant défini par la première direction X-X' et incliné par rapport au premier plan I ;
- la figure 3 est une section selon un troisième plan III du moteur des figures 1 et 2, le troisième plan III étant défini par la deuxième direction Y-Y' et par une troisième direction Z-Z' perpendiculaire aux première et deuxième directions X-X', Y-Y' ;
- la figure 4 est une section d'un deuxième mode de réalisation du moteur selon l'invention selon un quatrième plan IV, le quatrième plan IV étant défini par la première direction X-X' et par la troisième direction Z-Z', et
- la figure 5 est une section d'un troisième mode de réalisation du moteur selon l'invention selon un plan analogue au troisième plan III, ledit plan étant perpendiculaire à la première direction X-X'.

Dans la présente description, les termes « amont » et « aval » sont définis par rapport au sens de circulation d'un flux de fluide.

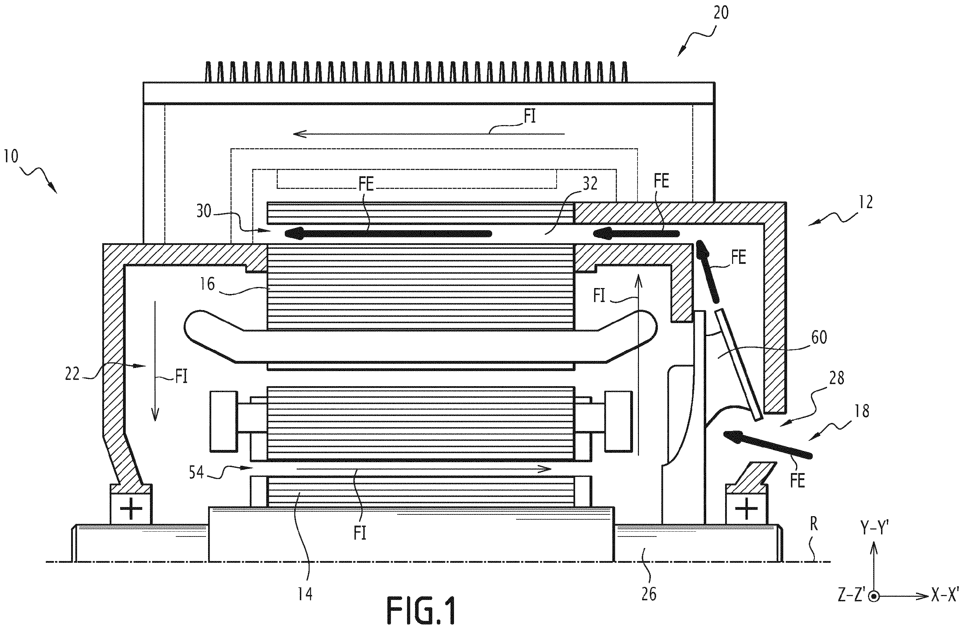

On a représenté sur les figures 1 à 3 un moteur 10 électrique selon un premier mode de réalisation de l'invention. Pour des raisons de simplicité, seule la moitié de moteur est représentée, l'autre moitié étant sensiblement symétrique de la moitié représentée par rapport à l'axe X-X'.

Le moteur 10 comprend un bâti 12, ou carter, définissant un volume intérieur au moteur 10, ainsi qu'un rotor 14 et un stator 16 logés dans le volume intérieur. Le moteur 10 comprend, en outre, au moins un circuit primaire 18 de refroidissement, au moins un dispositif de refroidissement 20 extérieur au bâti 12, au moins un circuit secondaire 22 de refroidissement et au moins un canal 24.

Le rotor 14 est monté solidaire en rotation sur un arbre de rotation 26 à l'intérieur du bâti 12 et monté mobile en rotation autour d'un axe de rotation R par rapport au stator 16, l'axe de rotation R s'étendant selon la première direction X-X'. Le stator 16 entoure le rotor 14 parallèlement à l'axe de rotation R à l'intérieur du bâti 12 et est coaxial au rotor. De façon classique, le rotor 14 et le stator 16 permettent de transformer une énergie électrique en énergie mécanique délivrée par l'arbre 26 du rotor 14.

En particulier, le stator 16 comprend une paroi externe 27, la paroi externe 27 étant définie comme étant la paroi du stator 16 la plus éloignée de l'axe de rotation R. La paroi externe 27 est sensiblement cylindrique d'axe R et s'étend selon la première direction X-X' et la troisième direction Z-Z'.

Le circuit primaire 18 est adapté pour refroidir le bâti 12 et le stator 16. Le circuit primaire 18 comprend une entrée primaire 28, une sortie primaire 30, au moins une conduite primaire 32, et au moins une déviation.

L'entrée primaire 28 est reliée à la conduite primaire 32 et est adaptée pour recevoir un fluide externe FE gazeux provenant de l'extérieur du moteur 10. Le fluide externe FE est, par exemple, l'air ambiant situé à l'extérieur du moteur 10. Typiquement, la température du fluide externe FE en entrée du circuit primaire 18 est comprise entre - 50°C et +45°C.

La sortie primaire 30 est également reliée à la conduite primaire 32 et est adaptée pour laisser s'échapper le fluide externe FE vers l'extérieur du moteur 10. Typiquement, la température du fluide externe FE en sortie du circuit primaire 18 est comprise entre -30°C et +65°C.

De préférence, la température du fluide externe FE en sortie du circuit primaire 18 présente un échauffement d'environ 20°C par rapport à l'air en entrée de l'entrée primaire 28.

De fait, l'entrée primaire 28 et la sortie primaire 30 sont chacune en communication fluidique avec l'extérieur du moteur 10.

Lorsqu'il y a plusieurs conduites primaires 32, l'entrée primaire 28 et la sortie primaire 30 sont reliées à chacune de ces conduites primaires 32.

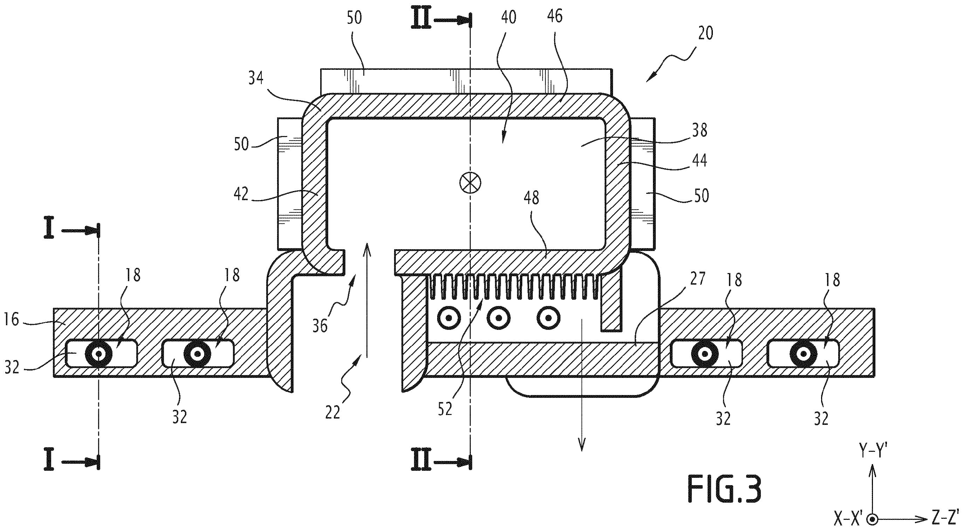

La ou chaque conduite primaire 32 est destinée à relier l'entrée primaire 28 à la sortie primaire 30, traverse le stator 16 et s'étend, par exemple, sensiblement selon la première direction X-X'. En particulier, comme visible sur la figure 3, chaque conduite primaire 32 traverse la paroi externe 27 du stator 16.

La déviation du circuit primaire 18, non visible sur les figures, présente la forme d'une bifurcation et est reliée à l'entrée primaire 28 et est adaptée pour dévier une partie du fluide externe FE entrant dans le circuit primaire 18 par l'entrée primaire 28. La déviation est, en outre, adaptée pour alimenter, à partir d'une fraction du fluide externe FE dévié, le canal 24. Avantageusement, la déviation est située en amont du dispositif de refroidissement 20, suivant un sens général de circulation du fluide externe FE entre l'entrée primaire 28 et la sortie primaire 30.

La fraction du fluide externe FE alimentant le canal 24 est, par exemple, comprise entre 5% et 40% du fluide externe FE reçu par l'entrée primaire 28, de préférence entre 5% et 15%.

Le dispositif de refroidissement 20 est adapté pour refroidir un fluide interne FI gazeux circulant dans le circuit secondaire 22. Le dispositif de refroidissement 20 est situé à l'extérieur du bâti 12 et comprend un corps 34, une entrée secondaire 36, une sortie secondaire 38 et au moins une conduite secondaire 40.

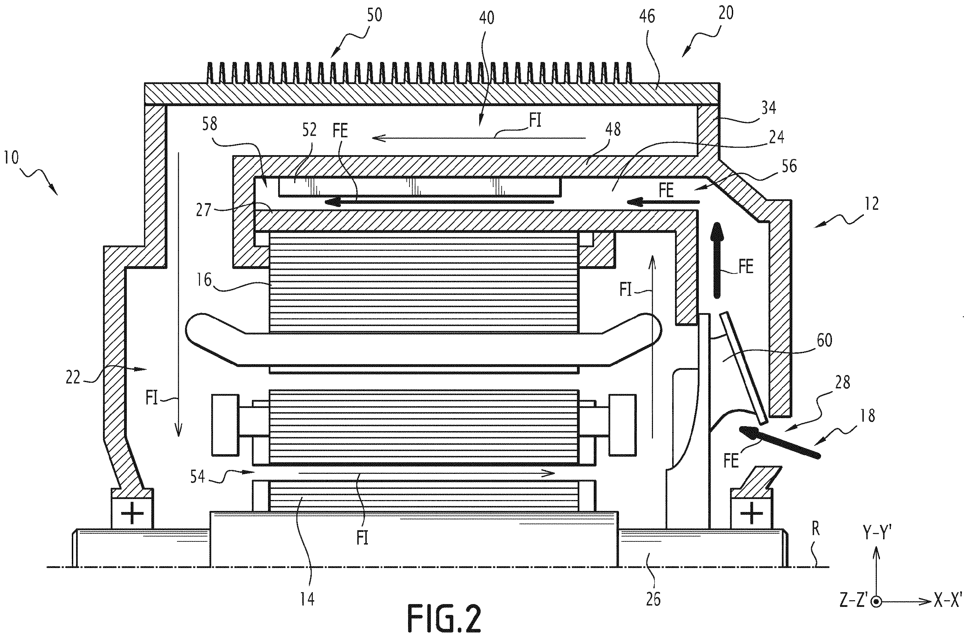

Le corps 34 présente des sections transversales, prises selon des plans perpendiculaires aux plans I, Il des figures 1 et 2, de forme, par exemple, cylindriques. De fait, le corps comprend trois parois externes 42, 44 et 46 et une paroi interne 48, s'étendant toutes longitudinalement selon la première direction X-X'.

Les parois externes 42, 44 et 46 sont situées vers l'extérieur du moteur 10 tandis que la paroi interne 48 est située vers le bâti 12 du moteur 10. De fait, la paroi interne 48 est située en regard d'au moins une partie de la paroi externe 27 du stator 16.

Comme visible sur les figures 2 et 3, les parois externes 42, 44 et 46 comprennent chacune des ailettes externes 50 de refroidissement fixées sur lesdites parois externes 42, 44 et 46 et orientées vers l'extérieur du corps 34. Chacune des parois externes 42, 44 et 46 comprend, par exemple, au moins trente ailettes externes 50.

Les ailettes externes 50 sont propres à assurer un échange thermique sur une grande surface entre un fluide circulant dans le dispositif de refroidissement 20 et l'air ambiant environnant ledit dispositif de refroidissement 20. Sur chacune des parois externes 42, 44 et 46, les ailettes externes 50 sont disposées parallèlement entre elles et s'étendent transversalement selon la troisième direction Z-Z'. En particulier, lorsque le moteur 10 est installé sur un véhicule de transport de personnes, tel un train, les déplacements du train créent un courant d'air ambiant qui est alors exploité par un système de ventilation extérieur créant ainsi une circulation d'air présentant une vitesse d'environ 5 mètres/seconde en direction des ailettes externes 50.

Comme visible sur la figure 3, la paroi interne 48 du dispositif de refroidissement 20 comprend des ailettes internes 52 de refroidissement fixées sur ladite paroi interne 48 et orientées vers l'extérieur du corps 34. De fait, par construction, les ailettes internes 52 sont situées en regard de la paroi externe 27 du stator 16. La paroi interne 48 comprend, par exemple, au moins cinq ailettes internes 52.

Les ailettes internes 52 sont destinées à assurer un échange thermique entre un fluide circulant dans le dispositif de refroidissement 20 et un fluide circulant dans un espace s'étendant entre la paroi interne 48 du dispositif de refroidissement 20 et la paroi externe 27 du stator 16.

Les ailettes internes 52 sont disposées parallèlement entre elles et s'étendent longitudinalement selon la première direction X-X'.

De préférence, les ailettes internes 52 sont chacune comprises dans des plans définis par la première direction X-X' et la deuxième direction Y-Y'.

Chaque ailette interne 52 présente une longueur, mesurée selon la première direction X-X' par exemple, d'environ 20 centimètres et une hauteur mesurée selon la deuxième direction Y-Y' d'environ 5 centimètres.

Les ailettes internes 52 sont, par exemple, réalisées en aluminium.

De préférence, les ailettes interne 52 sont espacées selon la troisième direction Z-Z' entre elles d'environ 1 centimètre.

L'entrée secondaire 36 débouche dans la conduite secondaire 40 et est adaptée pour recevoir un fluide interne FI circulant dans l'intérieur du bâti 12 au niveau du circuit secondaire 22. Typiquement, la température du fluide interne FI en entrée du dispositif de refroidissement 20 est comprise entre 100°C et 120°C.

La sortie secondaire 38 est reliée à la conduite secondaire 40 et est adaptée pour laisser s'échapper le fluide interne FI vers le circuit secondaire 22. Typiquement, la température du fluide interne FI en sortie du dispositif de refroidissement 20 est comprise entre 80°C et 100°C.

De fait, l'entrée secondaire 36 et la sortie secondaire 38 sont chacune en communication fluidique avec le volume intérieur du moteur 10.

La conduite secondaire 40 s'étend, au moins en partie, à l'extérieur du bâti 12 et est destinée à relier l'entrée secondaire 36 et la sortie secondaire 38. De préférence, la déviation est, par exemple, située en amont de la conduite secondaire 40.

Le circuit secondaire 22 est notamment adapté pour refroidir le rotor 14 et comprend au moins un tunnel 54.

Le tunnel 54 traverse le rotor 14 et est en communication fluidique avec l'entrée secondaire 36 et la sortie secondaire 38 du dispositif de refroidissement 20 par l'intermédiaire de passages radiaux s'étendant entre le bâti 12 et le rotor 14 ainsi que le stator 16.

Lorsqu'il y a plusieurs tunnels 54, chaque tunnel 54 traverse le rotor 14 et est en communication fluidique avec le dispositif de refroidissement 20 tel que décrit précédemment.

Le ou chaque tunnel 54 s'étend sensiblement selon la première direction X-X'.

Le circuit secondaire 22 est isolé du circuit primaire 18, c'est-à-dire qu'il n'y a pas de communication fluidique entre le circuit secondaire 22 et le circuit primaire 18 et que le fluide interne FI circulant dans le circuit secondaire 22 ne peut pas passer dans le circuit primaire 18. En particulier, le circuit secondaire 22 ne communique pas avec l'extérieur du moteur 10.

Le canal 24 est adapté pour améliorer l'efficacité du dispositif de refroidissement 20 en assurant un échange thermique supplémentaire entre le fluide interne FI circulant dans le dispositif de refroidissement 20 et la fraction de fluide externe FE circulant dans ledit canal 24.

Le canal 24 s'étend entre la paroi interne 48 du dispositif de refroidissement 20 et la paroi externe 27 stator 16 en définissant un espace interne. En outre, le canal 24 comprend une entrée de canal 56 et une sortie de canal 58.

L'entrée du canal 56 est reliée à la déviation pour recevoir la fraction de fluide externe FE déviée tandis que la sortie du canal 58 débouche sur l'extérieur du moteur 10 pour laisser s'échapper le fluide externe FE ayant circulé dans ledit canal 24. Typiquement, le fluide externe FE circule dans le canal selon la première direction X-X'.

Par construction, les ailettes internes 52 fixées sur la paroi interne 48 du dispositif de refroidissement 20 sont situées dans l'espace interne défini par le canal 24. De fait, la fraction de fluide externe FE circulant dans l'espace interne du canal 24 se trouve en contact avec les ailettes internes 52.

De préférence, la fraction de fluide externe FE circule sur toute la longueur du canal 24. Par-là, on entend que le canal 24 ne dispose que d'une sortie de canal 58 par laquelle peut s'échapper ledit fluide externe FE.

De préférence, le canal 24 présente une longueur, mesurée selon la première direction X-X', au moins égale à 80% de la longueur de la conduite secondaire 40. Cela permet alors de disposer d'une surface d'échange importante, et, par conséquent, d'augmenter le niveau d'échange thermique entre ledit canal 24 et le dispositif de refroidissement 20. Cette surface est encore augmentée par les ailettes internes 52.

Avantageusement, le canal 24 présente une longueur égale à la longueur de la conduite secondaire 40. Dans une telle situation, on comprend pourquoi la déviation est située en amont de la conduite secondaire 40. En particulier, lorsque la circulation du fluide externe FE dans le canal 24 est unidirectionnelle, disposer d'une déviation positionnée de la sorte permet de disposer d'une entrée de canal 56 située au plus proche du début de la conduite secondaire 40 et donc d'obtenir une longueur de canal 24 égale à celle de ladite conduite secondaire 40.

A titre d'illustration, le canal 24 présente une longueur d'environ 40 centimètres et des sections transversales à la première direction X-X' de forme sensiblement rectangulaire dont la largeur, mesurée selon la troisième direction Z-Z', est comprise entre 50 millimètres et 100 millimètres et dont la hauteur, mesurée selon la deuxième direction Y-Y', est comprise entre 20 millimètres et 40 millimètres.

Par construction, la fraction de fluide externe FE circule dans le canal 24 dans au moins un sens sensiblement parallèle à la conduite secondaire 40. Alternativement, la fraction de fluide externe FE circule dans le canal 24 dans au moins un sens opposé à la conduite secondaire 40. Dans les deux cas, la fraction de fluide externe FE circulant dans le canal 24 et le fluide interne FI circulant dans le dispositif de refroidissement 20 circulent dans des sens sensiblement parallèles entre eux.

Le fonctionnement du refroidissement du moteur 10 est à présent décrit, en référence aux figures 1 à 3.

On a représenté par des flèches fines le parcours du fluide interne FI circulant dans le circuit secondaire 22. Comme visible sur les figures 1 et 2, le fluide interne FI gazeux remplit le circuit secondaire 22. Le fluide interne FI, par exemple de l'air, est alors isolé de l'air ambiant. L'arbre de rotation 26 du rotor 14 est équipé d'un ventilateur, non représenté sur les figures, doté de pâles aptes à faire circuler le fluide interne FI à l'intérieur du circuit secondaire 22 et du dispositif de refroidissement 20. Ainsi, un flux interne est créé, menant le fluide interne FI depuis le rotor 14 vers le dispositif de refroidissement 20 et depuis le dispositif de refroidissement 20 vers le rotor 14. Cette circulation permet au fluide gazeux interne FI d'être refroidi dans le dispositif de refroidissement 20 par échange thermique avec l'extérieur puis de circuler dans le rotor 14 afin de refroidir celui-ci. Le fluide interne FI réchauffé lors de son passage par le tunnel 54 du rotor 14 est ensuite renvoyé vers le dispositif de refroidissement 20 où il est à nouveau refroidi par échange thermique.

On a représenté par des flèches épaisses le parcours du fluide externe FE circulant dans le circuit primaire 18 et par des flèches moyennes le parcours de la fraction de fluide externe FE circulant dans le canal 24. Comme visible en particulier sur la figure 1, un ventilateur 60 permet à du fluide externe FE, par exemple de l'air ambiant, de s'engouffrer par l'entrée primaire 28. Puis, le fluide externe FE est guidé par le circuit primaire 18 jusqu'à la déviation où une partie du fluide externe FE continue de circuler dans le circuit primaire 18 tandis que le reste est dévié vers le canal 24.

La partie de fluide externe FE continuant de circuler dans le circuit primaire 18 passe, par l'intermédiaire de chaque conduite primaire 32, au travers du stator 16. En circulant dans chaque conduite primaire 32, le fluide externe FE refroidit alors le stator 16. Enfin, la sortie primaire 30 permet d'évacuer ce fluide externe FE alors réchauffé vers l'extérieur du bâti 12. De fait, le bâti 12 et le stator 16 sont refroidis par du fluide externe FE provenant de l'extérieur du moteur 10.

L'autre partie du fluide externe FE déviée vers le canal 24 circule alors dans l'espace interne, c'est-à-dire entre la paroi interne 48 du dispositif de refroidissement 20 et la paroi externe 27 du stator 16. La température du fluide externe FE au niveau de l'entrée de canal 56 est sensiblement égale à la température dudit fluide externe FE au niveau de l'entrée primaire 28. Cette température est alors, par exemple, sensiblement égale à celle de l'air extérieur.

Ainsi, un échange thermique à lieu au niveau de la paroi interne 48 du dispositif de refroidissement 20 permettant au fluide externe FE, qui présente une température inférieure à celle du fluide interne FI, de refroidir le fluide interne FI circulant dans le canal secondaire 40.

En outre, lorsque le dispositif de refroidissement 20 comprend des ailettes internes 52, la fraction du fluide externe FE traversant le canal 24 entre en contact avec lesdites ailettes internes 52. Cela permet alors d'accroître les échanges thermiques entre le refroidissement du fluide interne FI circulant dans la conduite secondaire du dispositif de refroidissement 20 et le fluide externe FE circulant dans le canal 24.

A titre d'illustration, la vitesse du fluide externe FE circulant dans l'espace interne du canal est comprise entre 10 mètres/seconde et 80 mètres/seconde. Cette vitesse, relativement élevée, contribue à améliorer l'efficacité du dispositif de refroidissement 20.

La présente invention présente comme avantage d'être simple et peu coûteuse à mettre en oeuvre. En effet, l'invention nécessite la création de la déviation afin d'alimenter le canal 24 et utilise l'entrée primaire 28 existante du circuit primaire 18. De fait, l'invention ne nécessite pas de source d'énergie nouvelle.

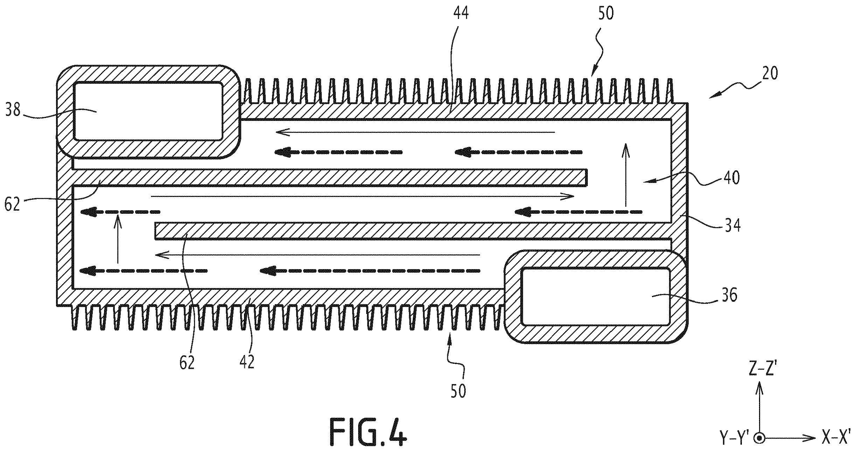

On a représenté sur la figure 4 un deuxième mode de réalisation du moteur 10 selon l'invention.

A la différence du mode de réalisation précédemment décrit, le dispositif de refroidissement 20 comprend au moins une et, de préférence, une pluralité de parois de séparation 62. Les parois de séparation 62 s'étendent sensiblement perpendiculairement à la paroi interne 48 du dispositif de refroidissement 20.

Ces parois de séparation 62 définissent avec les parois externes 42, 44 et 46 un chemin de circulation fluidique qui s'étend entre l'entrée secondaire 36 et la sortie secondaire 38 et qui correspond au chemin suivi par le fluide interne FI circulant dans le dispositif de refroidissement 20.

Les parois de séparation 62 présentent des longueurs respectives et sont disposées de sorte à ce que le fluide interne FI circule selon le chemin de circulation fluidique dans au moins deux directions sensiblement opposées. Dit autrement, les parois de séparation 62 définissent des chicanes dans la conduite secondaire 40.

Selon le mode de réalisation de la figure 4, le dispositif de refroidissement 20 comprend deux parois de séparation 62 et le fluide interne FI circule à partir de l'entrée secondaire 36 dans un premier sens, le premier sens étant parallèle à la première direction X-X', puis dans un second sens opposé au premier sens, puis à nouveau dans le premier sens jusqu'à rejoindre la sortie secondaire 38.

Sur cette figure 4, on a représenté par des flèches moyennes en pointillées la circulation du fluide externe FE circulant dans le canal 24. Ainsi, le fluide interne FI circule soit dans le même sens que le fluide externe FE soit dans un sens opposé. Ceci présente l'avantage, en particulier lorsque le fluide interne FI et le fluide externe FE circulent dans des sens opposés, d'augmenter l'échange thermique, puisque les vitesses respectives sont opposées, et par conséquence d'accroître le refroidissement du fluide interne FI circulant dans le dispositif de refroidissement 20 par le fluide externe FE circulant dans le canal 24. Ainsi, l'efficacité du dispositif de refroidissement 20 se retrouve encore augmentée.

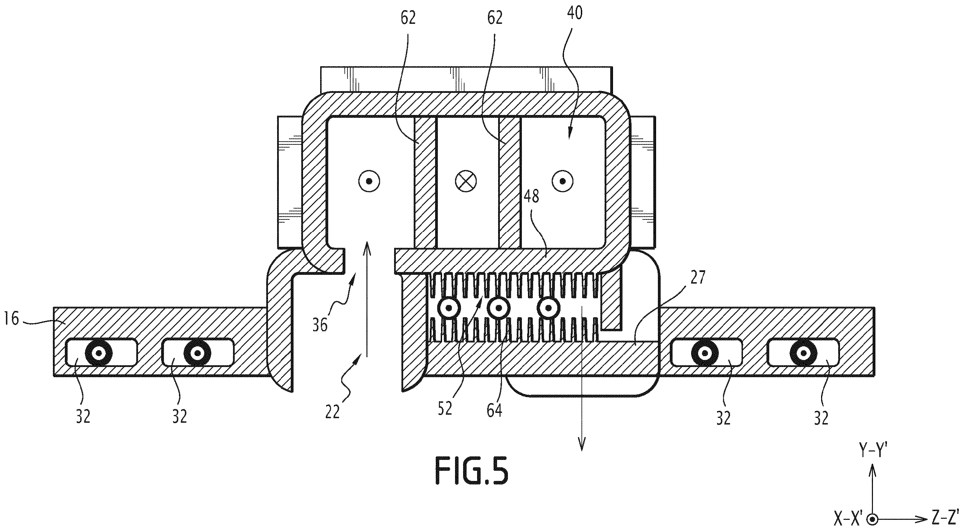

On a représenté sur la figure 5 un troisième mode de réalisation du moteur 10 selon l'invention.

A la différence du deuxième mode de réalisation précédemment décrit, le stator 16 comprend des deuxièmes ailettes internes 64.

Les deuxièmes ailettes interne 64 sont fixées sur la paroi externe 27 du stator 16 et sont logées dans l'espace interne défini par le canal 24.

De préférence, les deuxièmes ailettes internes 64 sont identiques aux ailettes internes 52 et sont toutes parallèles entres elles, et s'étendent dans des plans définis par la première direction X-X' et par la deuxième direction Y-Y'.

De fait, la zone du stator 16 sur laquelle sont fixées les deuxièmes ailettes 64 n'étant pas traversée par des conduites primaires 32, le stator 16 se retrouve également à cet endroit refroidi par la circulation de fluide externe FE dans le canal 24 par échange thermique assuré par les deuxièmes ailettes 64. Cela permet ainsi d'améliorer le refroidissement du stator 16.

## Revendications

1. Moteur (10) électrique comprenant :
- un bâti (12) définissant un volume intérieur ;
- un rotor (14) et un stator (16), le rotor (14) et le stator (16) étant logés dans le volume intérieur ;
- au moins un circuit primaire (18) de refroidissement traversant le stator (16), le circuit primaire (18) comprenant une entrée primaire (28) et une sortie primaire (30), chacune en communication fluidique avec l'extérieur du moteur (10), l'entrée primaire (28) étant adaptée pour recevoir un fluide externe (FE) provenant de l'extérieur, le fluide externe (FE) étant destiné à circuler dans le circuit primaire (18) et à sortir par la sortie primaire (30) ;
- au moins un dispositif de refroidissement (20) extérieur au bâti (12), le dispositif de refroidissement (20) comprenant une entrée secondaire (36), une sortie secondaire (38) et au moins une conduite secondaire (40), l'entrée secondaire (36) et la sortie secondaire (38) étant en communication fluidique avec le volume intérieur, la conduite secondaire (40) étant adaptée pour relier l'entrée secondaire (36) et la sortie secondaire (38) et s'étendant au moins en partie à l'extérieur du bâti (12), et
- au moins un circuit secondaire (22) de refroidissement séparé du circuit primaire (18), le circuit secondaire (22) traversant le rotor (14) et étant en communication fluidique avec l'entrée secondaire (36) et la sortie secondaire (38) du dispositif de refroidissement (20), un fluide interne (FI) étant destiné à circuler dans le circuit secondaire (22) et dans le dispositif de refroidissement (20),
en plus, le moteur (10) comprenant un canal (24) délimitant un espace interne, le canal (24) s'étendant entre une paroi interne (48) du dispositif de refroidissement (20) et une paroi externe (27) du stator (16), le circuit primaire (18) comprenant une déviation, reliée à l'entrée primaire (28), de sorte à alimenter le canal (24) à partir d'une fraction du fluide externe (FE) reçu par l'entrée primaire (28).

2. Moteur (10) selon la revendication 1, dans lequel la fraction du fluide externe (FE) circule dans le canal (24) dans un sens sensiblement parallèle à la conduite secondaire (40) du dispositif de refroidissement (20).

3. Moteur (10) selon la revendication 1 ou 2, dans lequel le dispositif de refroidissement (20) comprend des ailettes internes (52) de refroidissement situées dans l'espace interne, les ailettes internes (52) étant fixées sur la paroi interne (48) du dispositif de refroidissement (20) et s'étendant le long d'une première direction (X-X'), la première direction (X-X') s'étendant sensiblement selon la direction de circulation du fluide externe (FE) circulant dans le canal (24).

4. Moteur (10) selon l'une quelconque des revendications précédentes, dans lequel le stator (16) comprend des deuxièmes ailettes internes (64) logées dans l'espace interne, les deuxièmes ailettes internes (64) étant fixées sur la paroi externe (27) du stator (16) et s'étendant le long d'une première direction (X-X'), la première direction (X-X') s'étendant sensiblement selon la direction de circulation du fluide externe (FE) circulant dans le canal (24).

5. Moteur (10) selon l'une quelconque des revendications précédentes, dans lequel la vitesse du fluide externe (FE) circulant dans l'espace interne du canal (24) est comprise entre 10 mètres/seconde et 80 mètres/seconde.

6. Moteur (10) selon l'une quelconque des revendications précédentes, dans lequel la fraction du fluide externe (FE) circule sur toute la longueur du canal (24), la longueur du canal (24) étant au moins égale à 80% de la longueur de la conduite secondaire (40) du dispositif de refroidissement (20).

7. Moteur (10) selon l'une quelconque des revendications précédentes, dans lequel la déviation est située en amont de la conduite secondaire (40) du dispositif de refroidissement (20).

8. Moteur (10) selon l'une quelconque des revendications précédentes, dans lequel la fraction du fluide externe (FE) alimentant le canal (24) est comprise entre 5% et 15% du fluide externe (FE) reçu par l'entrée primaire (28).

9. Moteur (10) selon l'une quelconque des revendications précédentes, dans lequel le dispositif de refroidissement (20) définit un chemin de circulation fluidique s'étendant entre l'entrée secondaire (36) et la sortie secondaire (38), la conduite secondaire (40) du dispositif de refroidissement (20) comprenant une pluralité de parois de séparation (62) s'étendant dans des plans sensiblement perpendiculaires à la paroi interne (48) du dispositif de refroidissement (20), les parois de séparation (62) étant disposées de sorte à ce qu'un fluide circule selon le chemin de circulation fluidique dans au moins deux sens sensiblement opposés.

10. Moteur (10) selon l'une quelconque des revendications précédentes, dans lequel le canal (24) présente des sections transversales de forme sensiblement rectangulaires dont la largeur est comprise entre 50 millimètres et 100 millimètres et dont la hauteur est comprise entre 20 millimètres et 40 millimètres.

## Patentansprüche

1. Elektromotor (10), umfassend:
- einen Rahmen (12), der ein Innenvolumen definiert;
- einen Rotor (14) und einen Stator (16), wobei der Rotor (14) und der Stator (16) in dem Innenvolumen untergebracht sind;
- mindestens einen primären Kühlkreislauf (18), der durch den Stator (16) verläuft, der primäre Kreislauf (18) umfassend einen primären Einlass (28) und einen primären Auslass (30), die jeweils in Fluidverbindung mit der Außenseite des Motors (10) sind, wobei der primäre Einlass (28) angepasst ist, um ein externes Fluid (FE) aufzunehmen, das von der Außenseite stammt, wobei das externe Fluid (FE) dazu bestimmt ist, in dem primären Kreislauf (18) zu zirkulieren und durch den primären Auslass (30) auszutreten;
- mindestens eine Kühlvorrichtung (20) außerhalb des Rahmens (12), die Kühlvorrichtung (20) umfassend einen sekundären Einlass (36), einen sekundären Auslass (38) und mindestens eine sekundäre Leitung (40), wobei der sekundäre Einlass (36) und der sekundäre Auslass (38) in Fluidverbindung mit dem Innenvolumen sind, wobei die sekundäre Leitung (40) angepasst ist, um den sekundären Einlass (36) und den sekundären Auslass (38) zu verbinden, und sich mindestens teilweise außerhalb des Rahmens (12) erstreckt, und
- mindestens einen sekundären Kühlkreislauf (22), der von dem primären Kreislauf (18) getrennt ist, wobei der sekundäre Kreislauf (22) durch den Rotor (14) verläuft und in Fluidverbindung mit dem sekundären Einlass (36) und dem sekundären Auslass (38) der Kühlvorrichtung (20) ist, wobei ein internes Fluid (FI) dazu bestimmt ist, in dem sekundären Kreislauf (22) und in der Kühlvorrichtung (20) zu zirkulieren,
der Motor (10) zusätzlich umfassend einen Kanal (24), der einen Innenraum begrenzt, wobei sich der Kanal (24) zwischen einer Innenwand (48) der Kühlvorrichtung (20) und einer Außenwand (27) des Stators (16) erstreckt, wobei der primäre Kreislauf (18) eine Umlenkung umfasst, die mit dem primären Einlass (28) verbunden ist, um den Kanal (24) anhand eines Anteils des externen Fluids (FE), das durch den primären Einlass (28) empfangen wird, zu speisen.

2. Motor (10) nach Anspruch 1, wobei der Anteil des externen Fluids (FE) in dem Kanal (24) in einer Richtung zirkuliert, die im Wesentlichen parallel zu der sekundären Leitung (40) der Kühlvorrichtung (20) zirkuliert.

3. Motor (10) nach Anspruch 1 oder 2, wobei die Kühlvorrichtung (20) innere Kühlrippen (52) umfasst, die sich im Innenraum befinden, wobei die inneren Rippen (52) an der Innenwand (48) der Kühlvorrichtung (20) befestigt sind und sich entlang einer ersten Richtung (X-X') erstrecken, wobei sich die erste Richtung (X-X') im Wesentlichen entlang der Zirkulationsrichtung des externen Fluids (FE) erstreckt, das in dem Kanal (24) zirkuliert.

4. Motor (10) nach einem der vorherigen Ansprüche, wobei der Stator (16) zweite innere Rippen (64) umfasst, die in dem Innenraum untergebracht sind, wobei die zweiten inneren Rippen (64) an der Außenwand (27) des Stators (16) befestigt sind und sich entlang einer ersten Richtung (X-X') erstrecken, wobei sich die erste Richtung (X-X') im Wesentlichen entlang der Zirkulationsrichtung des externen Fluids (FE) erstreckt, das in dem Kanal (24) zirkuliert.

5. Motor (10) nach einem der vorherigen Ansprüche, wobei die Geschwindigkeit des externen Fluids (FE), das in dem Innenraum des Kanals (24) zirkuliert, zwischen 10 Meter/Sekunde und 80 Meter/Sekunde liegt.

6. Motor (10) nach einem der vorherigen Ansprüche, wobei die Fraktion des externen Fluids (FE) über die gesamte Länge des Kanals (24) zirkuliert, wobei die Länge des Kanals (24) mindestens gleich wie 80 % der Länge der sekundären Leitung (40) der Kühlvorrichtung (20) ist.

7. Motor (10) nach einem der vorherigen Ansprüche, wobei die Umlenkung stromaufwärts von der sekundären Leitung (40) der Kühlvorrichtung (20) angeordnet ist.

8. Motor (10) nach einem der vorherigen Ansprüche, wobei der Anteil des externen Fluids (FE), das den Kanal (24) speist, zwischen 5 % und 15 % des externen Fluids (FE) liegt, das durch den primären Einlass (28) empfangen wird.

9. Motor (10) nach einem der vorherigen Ansprüche, wobei die Kühlvorrichtung (20) einen Fluidzirkulationsweg definiert, der sich zwischen dem sekundären Einlass (36) und dem sekundären Auslass (38) erstreckt, der sekundäre Kanal (40) der Kühlvorrichtung (20) eine Vielzahl von Trennwänden (62) umfasst, die sich in Ebenen erstrecken, die im Wesentlichen senkrecht zu der Innenwand (48) der Kühlvorrichtung (20) sind, wobei die Trennwände (62) angeordnet sind, sodass ein Fluid entlang des Fluidzirkulationswegs in mindestens zwei im Wesentlichen entgegengesetzten Richtungen zirkuliert.

10. Motor (10) nach einem der vorherigen Ansprüche, wobei der Kanal (24) Querschnitte von im Wesentlichen rechteckiger Form aufweist, deren Breite zwischen 50 Millimetern und 100 Millimetern und deren Höhe zwischen 20 Millimetern und 40 Millimetern liegt.

## Claims

1. An electric motor (10) comprising:
- a frame (12) defining an inner volume;
- a rotor (14) and a stator (16), the rotor (14) and the stator (16) being housed in the inner volume;
- at least one primary cooling circuit (18) crossing the stator (16), the primary circuit (18) comprising a primary inlet (28) and a primary outlet (30), each in fluidic communication with the outside of the motor (10), the primary inlet (28) being adapted for receiving an external fluid (FE) coming from the outside, the external fluid (FE) being intended to circulate in the primary circuit (18) and to emerge through the primary outlet (30);
- at least one cooling device (20) outside the frame (12), the cooling device (20) comprising a secondary inlet (36), a secondary outlet (38) and at least one secondary conduit (40), the secondary inlet (36) and the secondary outlet (38) being in fluidic communication with the inner volume, the secondary conduit (40) being adapted for connecting the secondary inlet (36) and the secondary outlet (38) and extending at least partly on the outside of the frame (12), and
- at least one secondary cooling circuit (22) separated from the primary circuit (18), the secondary circuit (22) crossing the rotor (14) and being in fluidic communication with the secondary inlet (36) and the secondary outlet (38) of the cooling device (20), an internal fluid (FI) being intended to circulate in the secondary circuit (22) and in the cooling device (20),
the motor (10) further comprising a channel (24) delimiting an internal space, the channel (24) extending between an internal wall (48) of the cooling device (20) and an external wall (27) of the stator (16), the primary circuit (18) comprising a deviation, connected to the primary inlet (28), so as to supply the channel (24) from a fraction of the external fluid (FE) received by the primary inlet (28).

2. The motor (10) according to claim 1, wherein the fraction of the external fluid (FE) circulates in the channel (24) in a direction substantially parallel to the secondary conduit (40) of the cooling device (20).

3. The motor (10) according to claim 1 or 2, wherein the cooling device (20) comprises internal cooling fins (52) located in the internal space, the internal fins (52) being attached on the internal wall (48) of the cooling device (20) and extending along a first direction (X-X'), the first direction (X-X') extending substantially along the direction of circulation of the external fluid (FE) circulating in the channel (24).

4. The motor (10) according to any of the preceding claims, wherein the stator (16) comprises second internal fins (64) housed in the internal space, the second internal fins (64) being attached on the external wall (27) of the stator (16) and extending along a first direction (X-X'), the first direction (X-X') extending substantially along the direction of circulation of the external fluid (FE) circulating in the channel (24).

5. The motor (10) according to any of the preceding claims, wherein the velocity of the external fluid (FE) circulating in the internal space of the channel (24) is comprised between 10 metres/second and 80 metres/second.

6. The motor (10) according to any of the preceding claims, wherein the fraction of the external fluid (FE) circulates over the whole length of the channel (24), the length of the channel (24) being at least equal to 80% of the length of the secondary conduit (40) of the cooling device (20).

7. The motor (10) according to any of the preceding claims, wherein the deviation is located upstream from the secondary conduit (40) of the cooling device (20).

8. The motor (10) according to any of the preceding claims, wherein the fraction of the external fluid (FE) supplying the channel (24) is comprised between 5% and 15% of the external fluid (FE) received by the primary inlet (28).

9. The motor (10) according to any of the preceding claims, wherein the cooling device (20) defines a path for fluidic circulation extending between the secondary inlet (36) and the secondary outlet (38), the secondary conduit (40) of the cooling device (20) comprising a plurality of separation walls (62) extending in planes substantially perpendicular to the internal wall (48) of the cooling device (20), the separation walls (62) being positioned so that a fluid circulates along the fluidic circulation path in at least two directions substantially opposite to each other.

10. The motor (10) according to any of the preceding claims, wherein the channel (24) has cross-sections with a substantially rectangular shape, the width of which is comprised between 50 millimetres and 100 millimetres and for which the height is comprised between 20 millimetres and 40 millimetres.
